# EUROPEAN PATENT APPLICATION

(11) **EP 3 238 969 A1**
(43) Date of publication of application: **01.11.2017**
(21) Application number: 15872739.6
(22) Date of filing: 10.12.2015
(51) Int. Cl.: B60J 7/00, E06B 9/42

(54) **ROLLER SHADE DEVICE**

(30) Priority: 24.12.2014 JP 2014260182
(71) Applicant: Yachiyo Industry Co., Ltd., Sayama-shi, Saitama 350-1335 (JP)
(72) Inventor: HIGUCHI Yoshitaka, Sakura-shi Tochigi 329-1334 (JP); KIKUCHI Moto, Sakura-shi Tochigi 329-1334 (JP)
(74) Representative: Piésold, Alexander James
(86) International application number: PCT/JP2015/084666
(87) International publication number: WO 2016/104170

(57) **Abstract**

This roller shade device is provided with: a shade; a shade take-up roller for taking up the shade; wires which are attached to the shade; wire take-up rollers which are disposed with the axial centers thereof offset from the shade take-up roller and which are used for taking up the wires; reversal pulleys for reversing the direction of the wires; tension imparting means for imparting tension to the shade and the wires by application of bias such that the shade take-up roller and the wire take-up rollers are separated from the reversal pulleys; and interlocking rotating means for rotating the shade take-up roller and the wire take-up rollers in an interlocked manner. According to this roller shade device, a large width can be secured for the shade.

## Description

### TECHNICAL FIELD

The present invention relates to a roller shade apparatus.

### BACKGROUND ART

As a conventional example of a roller shade apparatus, Patent Literature 1 describes a roller shade apparatus which includes: a shade; a shade rollup roller which rolls up the shade; wires which are fixed to a distal end portion of the shade; wire rollup rollers which roll up the wires; reverse pulleys which reverse the wires between the distal end portion of the shade and the wire rollup rollers; and tension-applying means for biasing the reverse pulleys and the set of the shade rollup roller and the wire rollup rollers away from each other to apply a tension to the shade and the wires.

### CITATION LIST

### Patent Literature

Patent Literature 1: Japanese Patent Application Publication No. 2000-272341

### SUMMARY OF INVENTION

### Technical Problem

In the roller shade apparatus described in Patent Literature 1, the wire rollup rollers are disposed on both ends of the shade rollup roller and coaxially with the shade rollup roller. Since this structure requires a space for disposing the wire rollup rollers on both sides of the shade rollup roller, there arises a problem that it is impossible to allow for a large width dimension of the shade rollup roller, that is, a large width dimension of the shade.

The present invention has been made to solve such a problem, and an object thereof is to provide a roller shade apparatus which allows for a large width dimension of the shade.

### Solution to Problem

In order to solve the above problem, a roller shade apparatus of the present invention includes: a shade; a shade rollup roller which rolls up the shade; a wire which is attached to the shade; a wire rollup roller which is disposed with an axis thereof shifted relative to the shade rollup roller and which rolls up the wire; a reverse pulley which reverses the wire; and cooperation-rotation means for allowing the shade rollup roller and the wire rollup roller to rotate in a cooperated manner.

The present invention has a configuration including the cooperation-rotation means which disposes the axes of the wire rollup rollers shifted from the axis of the shade rollup roller, and which allows the shade rollup roller and the wire rollup rollers to rotate. This makes it possible to dispose the wire rollup rollers shifted in a shade rolling and unrolling directions relative to the shade rollup roller, rather than on both sides of the shade rollup roller. Hence, it is possible to allow for a large width dimension of the shade compared to a conventional configuration since a space for disposing the wire rollup rollers on both sides of the shade rollup roller is no longer necessary.

Additionally, in the roller shade apparatus of the present invention, the cooperation-rotation means includes a gear transmission mechanism, the gear transmission mechanism including a first gear which rotates together with the shade rollup roller and a second gear which rotates together with the wire rollup roller.

According to the present invention, the cooperation-rotation means has a small number of parts and is easy to assemble.

Besides, in the roller shade apparatus of the present invention, the shade rollup roller and the wire rollup roller are configured in a freely slidable manner so that a distance of the shade rollup roller and the wire rollup roller from the reverse pulley varies.

According to the present invention, it is possible to prevent a situation where shade and the wires are warped or excessively tense, which is caused by a difference between the amount of rollup (amount of unrolling) of the shade by the shade rollup roller and the amount of rollup (amount of unrolling) of the wires by the wire rollup rollers.

### Advantageous Effects of Invention

Since the present invention allows for a large width dimension of the shade, the present invention allows for a large width dimension of an opening portion covered by the shade.

### BRIEF DESCRIPTION OF DRAWINGS

FIG. 1 is a plan view of a roller shade apparatus according to the present invention, and illustrates a shade in a fully unrolled state.
FIG. 2 is a plan view of the roller shade apparatus according to the present invention, and illustrates the shade in a fully rolled state.
FIG. 3 is a perspective view of an external appearance of the roller shade apparatus according to the present invention.

### DESCRIPTION OF EMBODIMENTS

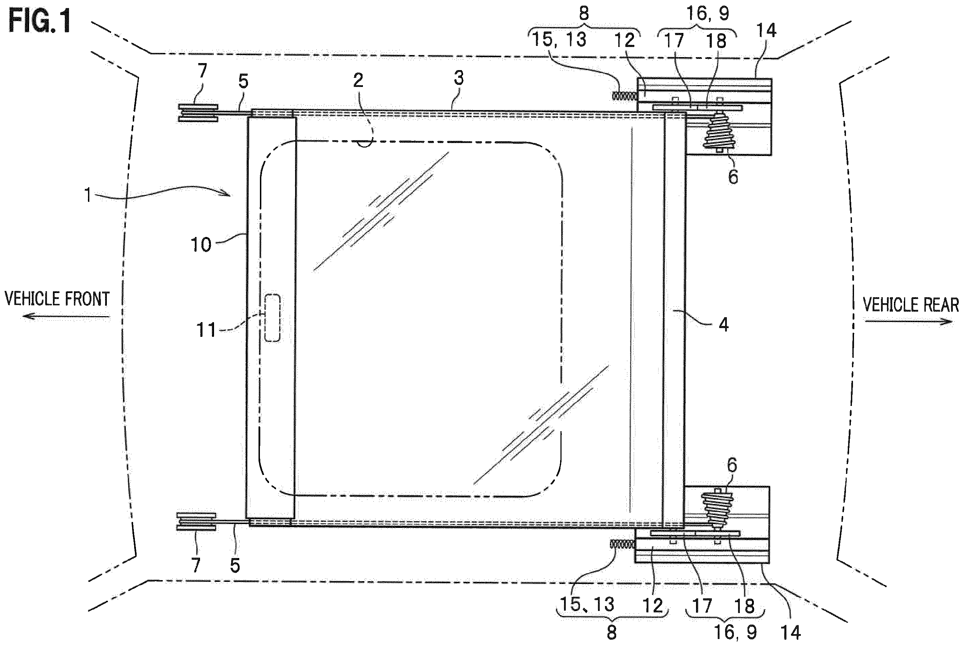

A description is provided for an embodiment where the present invention is applied to a vehicle. As illustrated in FIG. 1, a roller shade apparatus 1 of the present invention passes or shields light entering an opening portion 2 formed in a ceiling of a passenger compartment of the vehicle. Typically, a glass panel or the like for the sunroof apparatus is attached above the roller shade apparatus 1.

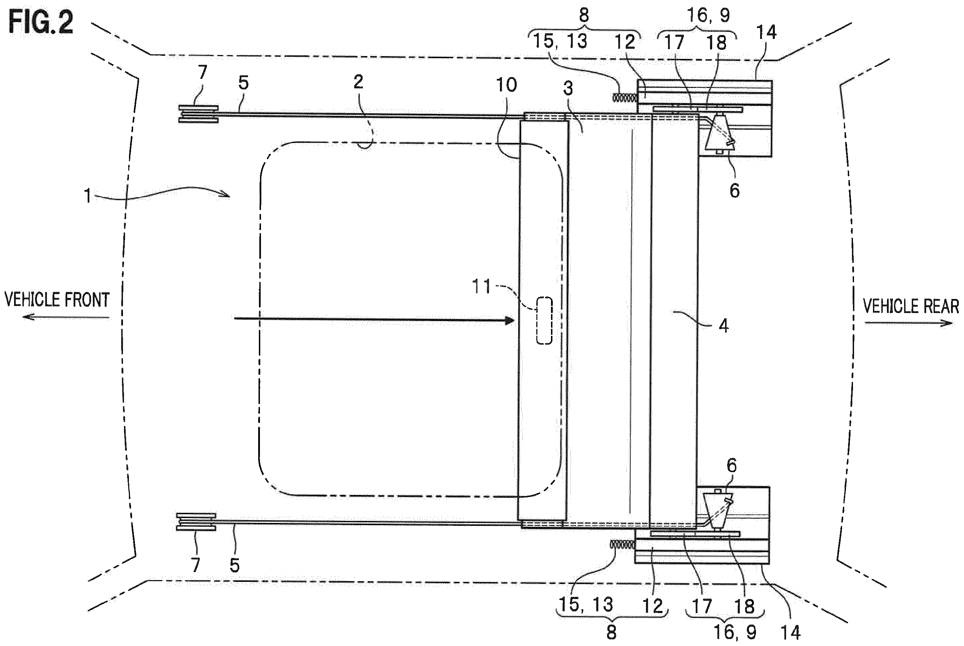

With reference to FIG. 1 to FIG. 3, the roller shade apparatus 1 includes: a shade 3; a shade rollup roller 4 which rolls up the shade 3; wires 5 which are attached to the shade 3; wire rollup rollers 6 which are disposed with their axes shifted relative to the shade rollup roller 4 and which roll up the wires 5; reverse pulleys 7 which reverse the wires 5; tension-applying means 8 for biasing the reverse pulleys 7 and the set of the shade rollup roller 4 and the wire rollup rollers 6 away from each other to apply a tension to the shade 3 and the wires 5; and cooperation-rotation means 9 for allowing the shade rollup roller 4 and the wire rollup rollers 6 to rotate in a cooperated manner.

The structure of the shade 3 itself is not particularly limited. However, the shade 3 typically has a basic layer configuration where a base material layer is sandwiched by surface material layers. It is a matter of course that, even in the case of such a multi-layer structure, the shade is formed as thin cloth having a certain degree of flexibility which enables rollup by the shade rollup roller 4. The shade 3 has, for example, a stay 10 which is formed around the distal end thereof and which is a stiff object provided to extend in a vehicle width direction. Formed on a lower side of the stay 10 is a handle part 11, such as a recessed or ledge-shaped pull, which is manually operated to roll and unroll the shade 3. Here, both ends of the stay 10 are formed as sliding shoes, and the region around the distal end of the shade 3 moves forward and backward while the sliding shoes are being guided by not-illustrated guide rails.

The shade rollup roller 4 is a cylindrical or columnar member which is disposed to the rear of the opening portion 2 in a freely rotatable manner with the direction of the axis as the vehicle width direction, and has a proximal end of the shade 3 attached to a peripheral surface. Both ends of the shade rollup roller 4 are supported in a freely rotatable manner between a pair of right and left sliders 12 to be described later.

The wires 5 are disposed in pair on both sides of the shade 3, and one end of each of the wires 5, 5 is fixed near a corresponding end of the stay 10. Disposed in pair to the front of the opening portion 2 are reverse pulleys 7 which are supported in a freely rotatable manner by not-illustrated brackets or the like, with the direction of the axis as the vehicle width direction. Each wire 5 extends frontward from a portion where the wire is fixed to the stay 10, and is wound halfway around the corresponding reverse pulley 7 to reverse its direction and extend rearward. The other end of each wire 5 is fixed to the corresponding wire rollup roller 6.

As described above, the wire rollup rollers 6 are disposed with their axes shifted relative to the shade rollup roller 4, and are provided in pair to the rear of the shade rollup roller 4 with the direction of the axis as the vehicle width direction. As in the case of the shade rollup roller 4, the wire rollup rollers 6 are also supported between the sliders 12 in a freely rotatable manner. Each of the wire rollup rollers 6 has the shape of a circular truncated cone where its roller diameter gradually decreases toward the outside of the vehicle in the width direction. Here, spiral grooves (not illustrated) are formed in the roller surfaces for spirally rolling up the wires 5 along the surfaces of the rollers. As described above, the configuration of the wire rollup rollers 6 in the shape of a circular truncated cone for spirally rolling up the wires 5 makes it possible to almost cancel out the variation in the rotational speed of the shade rollup roller 4 caused by the variation in the rollup diameter of the shade 3 around shade rollup roller 4, that is, the variation in the rotational speed of the wire rollup rollers 6 which rotate through the cooperation-rotation means 9 to be described later. This makes it possible that the amount of travel of the shade 3 and the amount of travel of the wires 5 per rotation of the shade rollup roller 4 almost coincide with each other over the entire roll and unroll stroke of the shade 3. Note that each of the wire rollup rollers 6 may have the shape of a circular truncated cone where its roller diameter gradually decreases toward the inside of the vehicle in the width direction, which is reversed as compared to the figure.

The tension-applying means 8 includes sliders 12 and biasing members 13 which apply a constant biasing force to the sliders 12 in a direction away from the reverse pulleys 7, that is, rearward. Each of the sliders 12 includes, for example, a vertical plate shaped member which is transversely long along the front and rear directions of the vehicle. As described above, the shade rollup roller 4 and the wire rollup rollers 6 are supported between these vertical plate shaped portions in a freely rotatable manner. The sliders 12 are guided by guide members 14 attached to the vehicle body, and thus the sliders 12 is configured in a freely slidable manner in the front and rear directions of the vehicle. Note that the above-described guide rails (not illustrated) which guide the sliding shoes of the stay 10 may be used as the guide members 14. In addition, as an example of the above described biasing member 13, a compression coil spring 15 is provided between a front end of each slider 12 and a corresponding member on the vehicle body side (for example, a bracket or the above-described guide rail attached to the vehicle body).

The cooperation-rotation means 9 of this embodiment includes a gear transmission mechanism 16 including a first gear 17, a spur gear which rotates together with the shade rollup roller 4, and a second gear 18, spur gear which rotates together with the corresponding wire rollup roller 6. The first gears 17, 17 are coaxially fixed to both ends of the shade rollup roller 4, and the second gear 18 is coaxially fixed to each wire rollup roller 6 so as to engage with the corresponding one of the first gears 17, 17. Since the first gear 17 and the second gear 18 are directly engaged with each other in this embodiment, the rotational direction of the shade rollup roller 4 and the rotational direction of the wire rollup rollers 6 are opposite from each other. Thus, the design is such that a rollup direction of the shade 3 and a rollup direction of the wires 5 are opposite from each other. However, a conversion gear may be inserted between the first gear 17 and the second gear 18 to orient the rotational direction of the shade rollup roller 4 and the rotational direction of the wire rollup rollers 6 in the same direction, and as a result to orient the rollup direction of the shade 3 and the rollup direction of the wires 5 in the same direction, for example.

### "Operations"

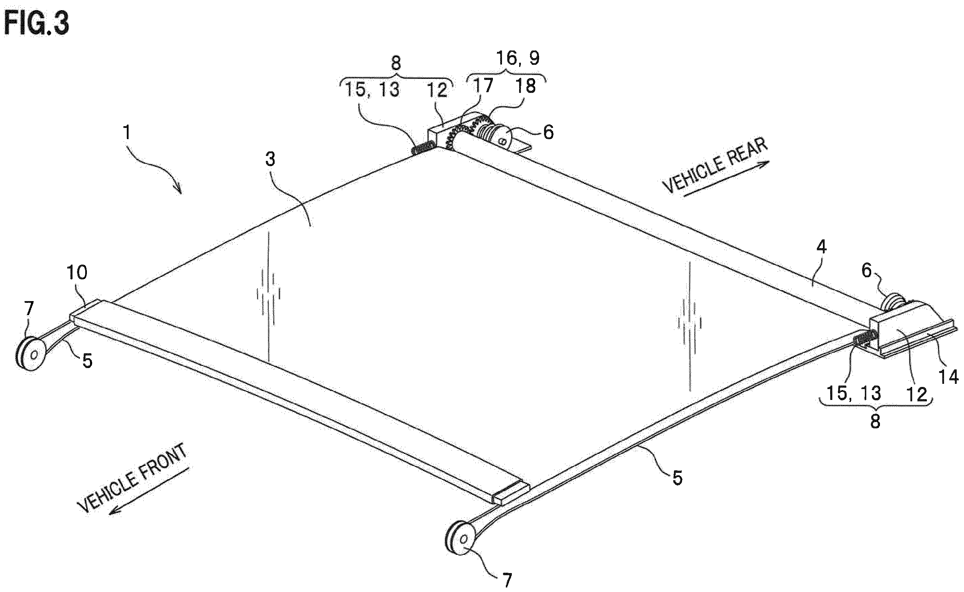

In FIG. 3, since the elastic force of the compression coil springs 15 biases the sliders 12 away from the reverse pulleys 7, the wires 5 and the shade 3 are made to have a tension, and reach and stay in a force equilibrium state. Thus, the shade 3 is kept positioned at a desired position without warpage. When the shade 3 is operated to be rolled and unrolled, the shade rollup roller 4 rotates in conjunction with the wire rollup rollers 6 through the engagement between the first gear 17 and the second gear 18.

The present invention has a configuration including the cooperation-rotation means 9 which disposes the axes of the wire rollup rollers 6 shifted from the axis of the shade rollup roller 4, and which allows the shade rollup roller 4 and the wire rollup rollers 6 to rotate in a cooperated manner. This makes it possible to dispose the wire rollup rollers 6 shifted in the front and rear directions of the vehicle relative to the shade rollup roller 4, rather than on the lateral sides of the shade rollup roller 4 in the vehicle width direction. Hence, it is possible to allow for a large width dimension of the shade since a space for disposing the wire rollup rollers 6 on both sides of the shade rollup roller 4 is no longer necessary.

Additionally, since the cooperation-rotation means 9 includes the gear transmission mechanism 16 including the first gear 17 which rotates together with the shade rollup roller 4 and the second gear 18 which rotates together with the corresponding wire rollup roller 6, the cooperation-rotation means 9 has a small number of parts and is easy to assemble.

Besides, since the shade rollup roller 4 and the wire rollup rollers 6 are configured in a freely slidable manner so that the distance from the reverse pulleys 7 varies, it is possible to surely prevent a situation where the shade 3 and the wires 5 are warped or excessively tense, which is caused by a difference between the amount of rollup (amount of unrolling) of the shade 3 by the shade rollup roller 4 and the amount of rollup (amount of unrolling) of the wires 5 by the wire rollup rollers 6. Moreover, the tension-applying means 8, which gives a tension to the shade 3 and the wires 5, has a structure with a small number of parts and easy to assemble.

A preferred embodiment of the present invention has been described above. The present invention is not limited to a vehicle, but is also applicable to a house or the like. In addition, a belt transmission mechanism or the like can be used as another option for the cooperation-rotation means 9. Furthermore, the shade 3 may be rolled and unrolled electrically, rather than manually. Additionally, the present invention can be carried out without limiting the layouts, the shapes, the number etc. of the constituent elements to those in the drawings.

### Reference Signs List

- 1: roller shade apparatus
- 2: opening portion
- 3: shade
- 4: shade rollup roller
- 5: wire
- 6: wire rollup roller
- 7: reverse pulley
- 8: tension-applying means
- 9: cooperation-rotation means
- 16: gear transmission mechanism
- 17: first gear
- 18: second gear

## Claims

1. A roller shade apparatus comprising:
a shade;
a shade rollup roller which rolls up the shade;
a wire which is attached to the shade;
a wire rollup roller which is disposed with an axis thereof shifted relative to the shade rollup roller and which rolls up the wire;
a reverse pulley which reverses the wire; and
cooperation-rotation means for allowing the shade rollup roller and the wire rollup roller to rotate in a cooperated manner.

2. The roller shade apparatus according to claim 1, wherein
the cooperation-rotation means includes a gear transmission mechanism, the gear transmission mechanism including a first gear which rotates together with the shade rollup roller and a second gear which rotates together with the wire rollup roller.

3. The roller shade apparatus according to claim 1 or 2, wherein
the shade rollup roller and the wire rollup roller are configured in a freely slidable manner so that a distance of the shade rollup roller and the wire rollup roller from the reverse pulley varies.
